# EUROPEAN PATENT APPLICATION

(11) **EP 1 283 125 A2**
(43) Date of publication of application: **12.02.2003**
(21) Application number: 02255575.9
(22) Date of filing: 08.08.2002
(51) Int. Cl.: B60N 2/58

(54) **Fixing part for a car seat**

(30) Priority: 10.08.2001 GB 0119641
(71) Applicant: YKK Portugal, Lda., Carreqado, 2580 Alenquer (PT)
(72) Inventor: Coelho, Carlos, 3 Carregado, 2580-491 (PT)
(74) Representative: Luckhurst, Anthony Henry William

(57) **Abstract**

A fastener to attach a cord to the frame of a car seat, where the cord 202 is for pulling part of the inside of the car seat cover inwards to create a depression on the seat. The fastener comprises a hook 209 and a clip 208, each fitting onto one end of the cord 202. The hook 209 has a series of teeth 220 on its engaging surface so that the tension of the cord 202 can be adjusted by changing which tooth engages with the frame. The teeth 220 can be shaped to give a ratchet effect. Vibrations of the car will force the hook randomly in both a tightening and a loosening direction. With a ratchet shape, if the cord 202 loosens, these vibrations will only have an effect in the tightening direction, thereby automatically causing the cord 202 to tighten.

## Description

The present invention relates to fixing parts for a car seat, and in particular, to fixing parts for mounting a cord which pulls part of the seat cover inwards to form a depression on the surface of the seat.

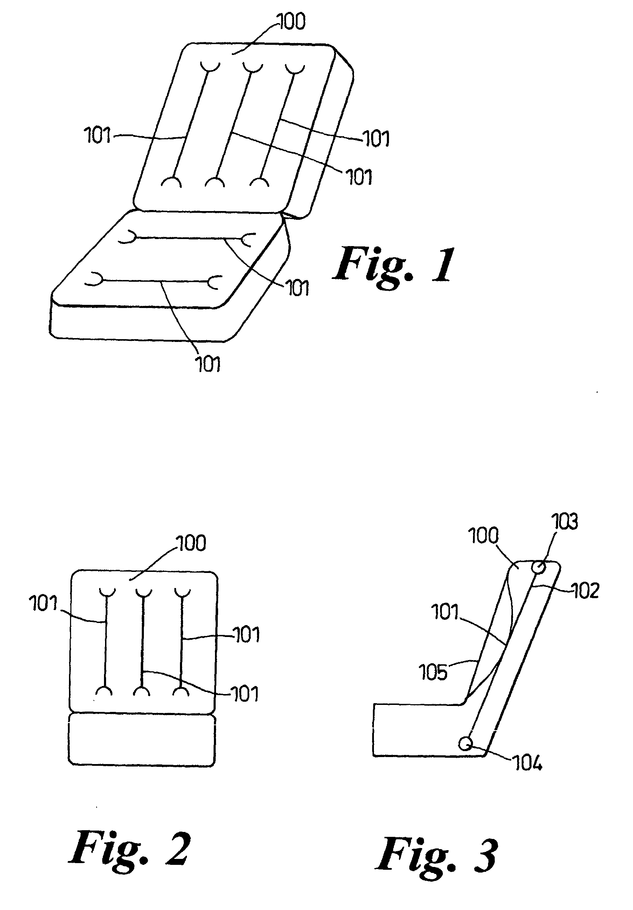

It is common for car seats to be designed with depressions in the form of straight lines running along the cushion. Figures 1 and 2 show a perspective view and a front view of a car seat 100 with a series of straight line depressions 101. Such depressions allow the shape of the seat to be improved, for example, by forming a recessed area along the middle of the seat to make it more comfortable to sit on, whilst remaining firm and supportive.

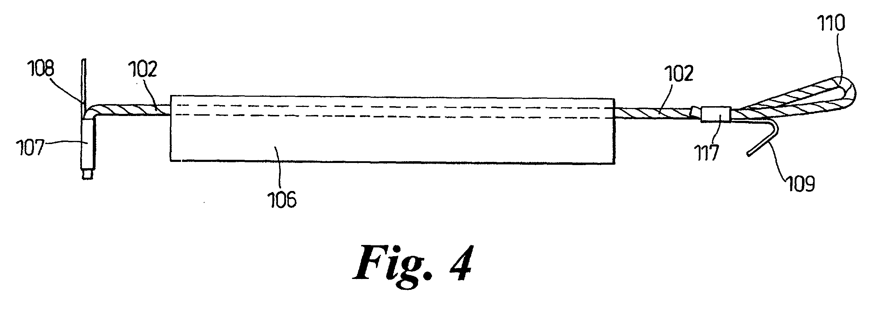

The depressions can be formed by fixing a cord lengthways to the inside of the seat cover, and pulling the ends of the cord back towards the frame of the seat. Figure 3 shows such an arrangement, with part of the length of the cord 102 attached to the middle section of the car seat cover. The cord is pulled taut, and its ends are fastened to the top 103 and the bottom 104 of the frame, pulling back part of the car seat cover from its normal position 105 to form a depression 101 in the seat. As shown in figure 4, it is preferable to have the cord 102 fixed to a fabric sleeve 106, then the fabric sleeve 106 sewn onto the reverse side of the car seat cover.

A previously known method of attaching the cord to the frame is by using metal fixing parts at each end of the cord. Figure 4 shows a cord 102 with a metal clip 108 at one end, and a metal hook 109 at the other end. Both the hook 109 and clip 108 are fixed to the cord by metal sleeves 107, 117 which are tightened around the circumference of the cord. The hook is formed from a piece of folded metal, and the clip 108 forms a "T" shape with the cord, where the metal sleeve 107 forms one arm of the "T" and a metal strut protruding from the metal sleeve 107 forms the other arm.

The cord is then fixed to the inside of a car seat cover via the fabric sleeve. To attach the fixing parts to the frame of the car seat, the clips are inserted through holes provided in a top section of the frame, and the hooks are then pulled over the base of the frame. It is difficult to position the hooks 109 by hand, as in order to obtain the necessary tension on the cord 102, a force of approximately 40 kg is required to pull the hook over the edge of the frame. Hence the cord is provided with a loop 110 next to the hook 109. The hook 109 may then be more easily positioned on the frame by using a special assembly tool to pull on the loop 110, providing the necessary force. The assembly tool is simply a hook shaped tool with a large handle. The hook on the tool engages in the loop 110 of the cord 102, allowing force to be applied much more easily to the end of the cord 102.

However, a problem with this type of fastening arrangement is that after several years, metal fatigue occurs, and the cord will loosen. The fixing parts are then free to move, and they may rub against the frame, creating an unpleasant noise when someone sits on the car seat or when the car vibrates after driving over a bump or hollow in a road.

The present invention provides a car seat comprising a frame, a cover, a cord mounted at its ends on the frame and attached between its ends to the cover, and a hook attached to one end of the cord and engaging with the frame to hold the cord under tension on the frame, wherein the hook is shaped to move, in use, relative to the frame to take up any loss of tension in the cord.

Preferred embodiments of the present invention are now described with reference to the following drawings, in which:

Figure 1 is a perspective view of a car seat.

Figure 2 is a front view of a car seat.

Figure 3 is a side cross section of a car seat, showing a cord held taut between two support points, to pull part of the seat cover backwards.

Figure 4 shows the cord and clips according to the prior art, with the cord fastened to a fabric sleeve.

Figures 5a-5h show the fastener parts according to the present invention.

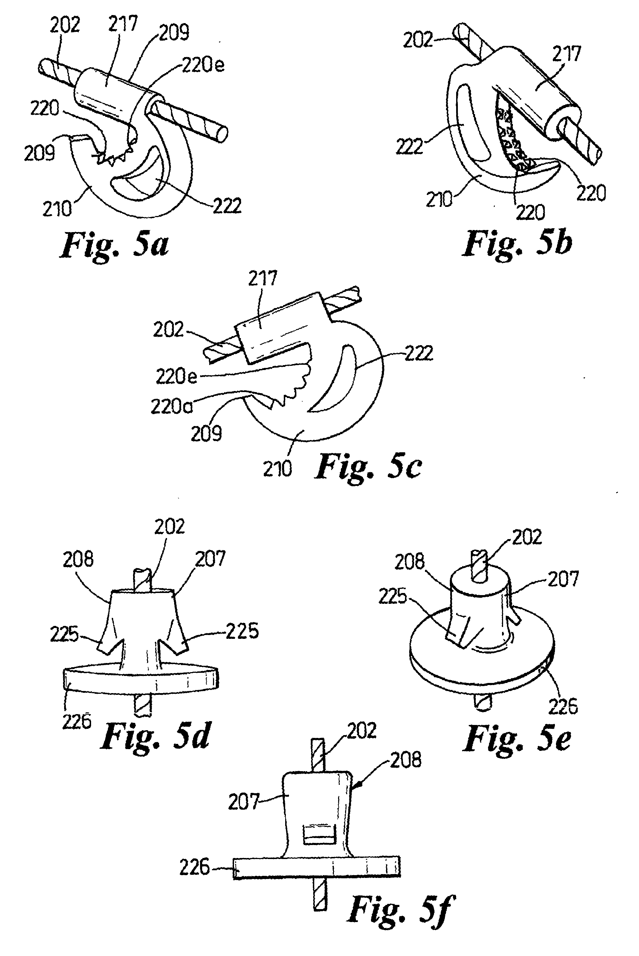

Figures 5a to 5c show perspective views and a side view of a hook part,
Figures 5d to 5f show one embodiment of a clip part,

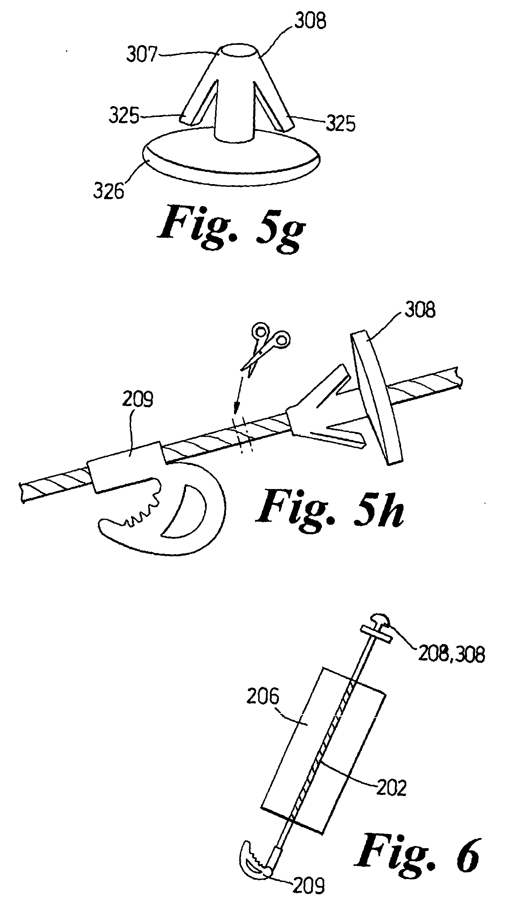

Figure 5g shows another embodiment of a clip part, and
Figure 5h shows a cord with a hook part and a clip part attached.

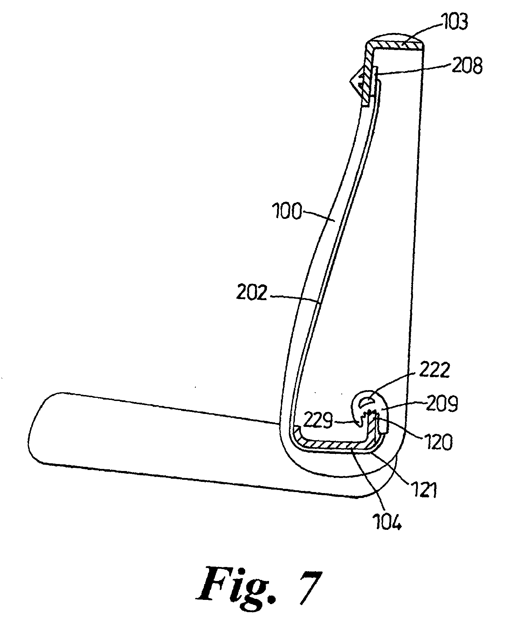

Figure 6 shows a cord with attached sleeve, for fixing to the inside of a car seat cover, and with fastener parts according to the present invention.

Figure 7 shows a cross section of a car seat, with a cord and fasteners according to the present invention.

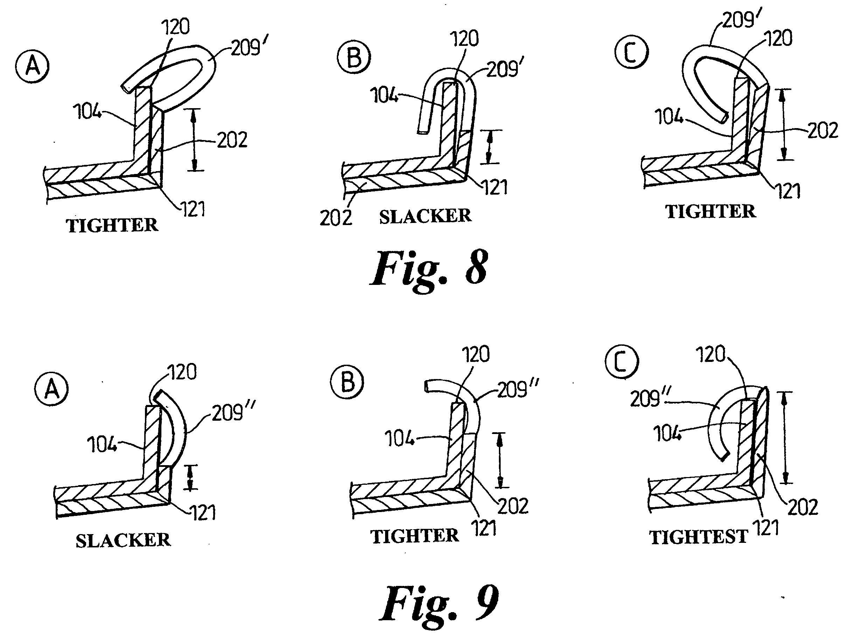

Figures 8A-C show an example of a long narrow hook engaging on a frame.

Figures 9A-C show an example of a short wide hook engaging on a frame.

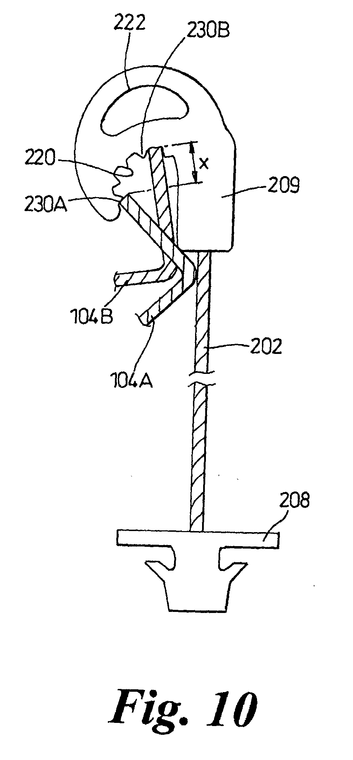

Figure 10 shows the hook according to the first embodiment of the invention, showing two different positions of the hook relative to the frame.

Figure 5a shows a side perspective view of a hook 209 according to a preferred embodiment of the invention. The hook 209 has a gripping section 217 for gripping a cord 202, and an arcuate or C-shape hook member 210 with a plurality of teeth 220 on its inner surface. The teeth 220 are spaced along the inner surface from close to the outer end or point 229 of the hook distal of the gripping section 217 to close to the cord gripping section 217. The hook member 209 has a crescent shaped hole 222 running through the hook 209. The hole 222 is aligned to follow the curve of the C-shapes. The aperture 222 makes it easier to attach the hook 209 to the frame of the car seat. It allows the hook 209 to be pulled tightly over the edge of the frame, using an assembly tool as previously described with reference to the prior art. The position of the crescent shaped hole makes it easy to align the hook, using the assembly tool, so that a tooth 220e furthest from the tip 209 will automatically engage with the frame. The advantage of this is described later.

As best seen in Figure 5b, the teeth 220 are in a double row of teeth i.e. rows of two teeth side by side along the inner arc of the hook, which can add stability to the hook as it is held in position on the frame. However, it is also possible to use a hook with a single row of teeth.

The cord 202 is preferably made from a non-elastic material, for example, polyester.

Figure 5d shows a clip according to a first embodiment of the invention. The clip 208 has a disc shaped base 226, and a central pillar 207 with an axial channel running through it, to receive the cord 202. The pillar 207 has two prongs 225 extending from its top end, aligned diametrically opposite one another. The prongs 225 protrude towards the base 226 with a slight outward curvature.

Figure 5g shows a second embodiment of the clip, 308. The basic design is similar to figure 5d, with a base 326, a central pillar 307, and two prongs 325. However, the prongs are longer, and are cylindrically shaped rather than curved.

The hooks and clips are preferably made of a plastics material, such as POM (poly-oxy-methylene) or polyamide. Therefore metal fatigue does not arise, and the cord is less likely to loosen. It is preferable to use a plastics material which has some elasticity, and is not too hard.

The hooks and clips are preferably made by insert moulding the plastics around the cord. Firstly the cord is inserted into the mould, then the plastic is injected around the cord. Preferably, a large number of hooks and clips are alternately moulded onto a single cord. This is sold to manufacturers in the form of a roll, and the manufacturers may cut off sections with a single hook and clip, as required. The hook and clip forming a co-operating assembly (as seen in Figures 6 and 7) will be spaced apart by a predetermined distance.

Figure 5h shows a cord 202 with a hook, and a clip insert moulded on the cord 202. This is part of a longer cord, with a whole series of hooks and clips alternately moulded onto it. The part of the cord indicated by the arrow, i.e. between the hook and the clip in the figure, should be cut in order to have a hook and clip combination facing in the correct direction on the cord. The hook 209 of figure 5h has teeth on its inner surface, as in figures 5a-c.

Figure 6 shows the hook 209 and clip 208, 308, attached to a cord 202. The cord 202 is fixed to a cloth sleeve 206, which can be sewn to the inside surface of a car seat cover.

Figure 7 shows the hook 209 and clip 208, attached to a cord, and in position inside a car seat. The clip 208 fits through a hole in the top of the frame 103. The hole is shaped with a slit, to allow the prongs 225 of the clip 208 to be inserted through the hole. The clip 208 can then be rotated so that the prongs engage against the frame, holding the clip in position inside the hole.

The cord extends from the clip 208, down through the inside of the frame, and passes under the bottom part of the frame 104. It is then fixed onto an edge 120 of the bottom part of the frame 104 by the hook 209. To lift the hook 209 over the edge 120, the cord 202 must be stretched tight, as known in the prior art. A hook, with a handle, is inserted through aperture 222 and an operative pulls the hook and cord 202 and hooks the hook 202 over the frame edge 120.

The hook 209 engages on the frame by means of one of its teeth 220. The chosen tooth determines the tension in the cord 202, because the position of the cord gripping section 217 relative to the frame determines the amount of cord available to span the gap from the top edge 120 to the bottom 121 of the frame. When the hook is moved to engage a different tooth, the way in which the tension changes is determined by the exact shape of the hook. For a hook with high curvature and long ends, the minimum tension on the cord will occur when a tooth near the centre of the hook engages against the frame. For a hook with low curvature and short ends, the minimum tension will tend to occur when a tooth at the tip of the hook engages the frame. Figures 8A-C and 9A-C shows two different shapes of hook engaging with the frame. In figures 8A-C, the hook 209' is long and narrow. Three different positions of the hook are shown, and minimum tension occurs when a tooth (not shown) near its centre is engaged, as in figure 12B. The frame 104 extends deepest into the hook recess in this position. If the hook 209' is rotated, the frame extends less into the recess, and the end of the hook holding the cord is pulled upwards, pulling the cord 202 tighter. This means that all other teeth 220, either side of the centre teeth, may subsequently be used for tightening the cord.

In figures 9A-C, the hook 209" is short and wide or flat. Again, three different positions of the hook 209" are shown, but in this case, minimum tension occurs when a tooth near the tip is engaged. Due to the shape of the hook, the effect of the frame extending into the recess is much smaller.

In the hook of the first embodiment of the invention, the situation shown in figures 8A and 8B occurs. The hook is therefore firstly attached to the frame with a tooth near its centre engaged. By rotating the hook so that a tooth nearer its tip becomes engaged, the cord can be tightened. The teeth are spaced to allow approximately 1 mm to 1.5 mm of slack cord to be taken up each time the neighbouring tooth is engaged. It is necessary to have sufficient space inside the car seat, around the position of the hook, in order to allow the hook to rotate on the frame edge 120.

Preferably, the hook engages against the frame like a ratchet, being able to easily move in a direction to tighten the cord, but not easily able to move in a direction to loosen the cord. For this purpose, the teeth may be asymmetrically shaped, with one edge having a steeper incline than the opposite edge. However, it may not be necessary for the teeth to be asymmetrical. Figure 10 shows the hook at two different positions with respect to the frame. It can be seen that when the frame meets a tooth at an angle and is to be moved perpendicularly to get to the next tooth, the teeth will automatically be sloped in one direction with respect to the frame. They will then behave as ratchet teeth, being easier to slide the frame towards the tip than towards the centre. In figure 10, preferably, the frame starts off engaged in a tooth which is slightly to the tip end of the centre. As it is moved along towards the tip, the cord will tighten.

It is also possible to use a similar ratchet mechanism with a hook of a different shape. For an alternative shape of hook, the shape and position of the hole 222 may be modified to allow, when using the assembly tool, automatic alignment of the tooth on the frame 104 which corresponds to the least amount of cord tension.

When the car is in motion, vibrations arise due to the engine, and due to bumps on the road surface, etc. These vibrations will tend to move the hook about randomly, relative to the frame. Due to the ratchet nature of the teeth, when such vibrations force the hook in the loosening direction, the currently engaged tooth will hold it in place, and it will not loosen. However, when the hook is forced in the tightening direction, the tooth will not hold it in place. If the cord is loose, the hook will move such that the next tooth becomes engaged, thereby tightening the cord. By this means, the toothed hook is capable of automatically tightening the cord if it loosens. This keeps the hook held tightly against the frame, and avoids the noise (such as creaking) generated by the prior art design fastener after the cord has lost its initial tightness.

## Claims

1. A car seat comprising a frame, a cover, a cord mounted at its ends on the frame and attached between its ends to the cover, and a hook attached to one end of the cord and engaging with the frame to hold the cord under tension on the frame, wherein the hook is shaped to move, in use, relative to the frame to take up any loss of tension in the cord.

2. A car seat as claimed in claim 1, wherein the hook hooks over an edge on a frame member and, in use, rotates around the edge in a first direction to take up the loss of tension in the cord.

3. A car seat as claimed in claim 2, wherein the hook has a plurality of teeth, a tooth engaging with the frame edge to hold the hook against movement in a direction opposite to the first direction.

4. A car seat as claimed in claim 3, wherein the teeth are formed on an arcuate surface facing the frame edge.

5. A fixing part for holding a cord taut within a car seat, comprising a cord-gripping section for gripping a part of the cord, and an engaging section for engaging with the frame of the car seat to hold the cord in position under tension on the car frame, wherein the engaging section comprises a plurality of teeth, each tooth being engagable with said frame to hold the fixing part on the frame, and wherein the teeth are shaped to form a ratchet with the frame, such that when mounted on the frame the fixing part may move, in use, in a first direction to tighten the cord.

6. A fixing part, as claimed in claim 5, wherein the engaging section is mounted such that in use, it can move in a tightening direction when forced by random movement or vibrations of the car or seat, but where the ratchet prevents movement in a loosening direction.

7. A fixing part, as claimed in claim 5 or 6, wherein the engaging section comprises a hook and the teeth are formed on a surface of the hook.

8. A fixing part, as claimed in any one of the previous claims, wherein the cord is fixed to a car seat cover to pull part of the cover inwards and create a depression in the seat.

9. A set of fixing parts for a cord, comprising a hook part as claimed in any one of claims 1 to 4, and a clip part comprising cord gripping means and a prong, the clip part being insertable through a hole in a car seat frame and held in position by the prong.

10. A cord with a pair of fixing parts mounted on its ends, wherein the fixing parts are as claimed in claim 5.

11. A fixing part for mounting an end of a cord on a car seat frame, the fixing part being attached, in use, to the end of the cord and engaging with the car seat frame to hold the cord under tension, the cord being attached to the car seat frame at its other end, wherein the fixing part comprises a hook which, in use, is hooked over a frame part, a surface of the hook being held in engagement with the car seat frame by the tension in the cord, wherein the hook surface is shaped so that in use, the hook surface will be moved relative to the frame to tighten the cord if it becomes slack.

12. A fixing part as claimed in claim 11, wherein the fixing part comprises a body portion which is attached, in use, to the cord, and the hook surface faces the body portion to form a recess which receives the frame, and a plurality of teeth are formed on the hook surface for engaging the frame.

13. A fixing part as claimed in claim 12, wherein the teeth resist measurement of the hook surface in one direction relative to the frame.

14. A fixing part, as claimed in any one of claims 5 to 13, comprising a loop, the loop forming a hole in the fixing part, such that a hook may be inserted in the loop to allow the fixing part to be forcefully pulled whilst aligned in a first orientation, the orientation being dependent on the shape of the hole.

15. A car seat with a frame and a seat cover, in which depressions are formed in the surface of the seat by means of a cord being fixed to the frame and the seat cover, wherein the means for fixing the cord to the frame comprises a fixing part, as claimed in any preceding claim.

16. An anchor for anchoring an end of a tensioning cord in a car seat, wherein the anchor is of plastics material.

17. An anchor for anchoring an end of a tensioning cord in a car seat, the anchor having an arcuate surface for engaging, in use, an edge of a frame member of the car seat, and a plurality of teeth spaced along the arcuate surface, a tooth engaging the frame member edge to hold the hook in position when the cord is tensioned, and whereby the tension in the cord is adjustable by moving the hook so that another tooth engages the frame member edge.
